# EUROPEAN PATENT SPECIFICATION

(11) **EP 3 540 298 B1**
(45) Date of publication and mention of the grant of the patent: **05.05.2021**
(21) Application number: 19163356.9
(22) Date of filing: 18.03.2019
(51) Int. Cl.: F21V 5/04, F21V 11/10, G02B 27/30, G02B 19/00, F21V 29/76, F21Y 115/10

(54) **LIGHTING DEVICE**
BELEUCHTUNGSVORRICHTUNG
DISPOSITIF D'ÉCLAIRAGE

(30) Priority: 16.03.2018 IT 201800003698
(43) Date of publication of application: 18.09.2019
(73) Proprietor: LINEA LIGHT S.R.L., 31028 Vazzola (TV) (IT)
(72) Inventor: Vendrame, Nicola, 31050 Povegliano (IT)
(74) Representative: Petraz, Gilberto Luigi

(56) References cited:
- EP-A1- 3 168 054
- EP-A2- 0 140 994
- CN-U- 206 039 059
- CN-Y- 200 976 068
- JP-A- H0 976 085
- US-A1- 2011 075 440

## Description

### FIELD OF THE INVENTION

The present invention concerns a lighting device provided with an LED light source.

Applications of the lighting device according to the invention are for example situations in which light emission from above downward is required, known as "down-light" in this specific field, and a reduced glare and high visual comfort for users is required.

Further applications of the present invention are for example situations in which light emission from below upward, or "up-light", is required, or for lighting devices with bracket assembly.

### BACKGROUND OF THE INVENTION

Lighting devices are known, for example of the spotlight type, used to illuminate specific localized areas of a space.

One problem with known lighting devices is that the exit beam of light can cause a glare effect for the user, and can therefore be annoying or possibly even harmful for a user's eyesight.

To reduce this problem it is necessary to move the light source backward with respect to the exit of the support body, and at the same time to reduce the emission aperture of the beam of light, so as to reduce the glare effect and provide visual comfort for the user.

Some known solutions applied to light sources of the discharge lamp type provide to position the light source inside a tubular body, set back with respect to an exit aperture, and to use parabolas to concentrate and distribute the beam of light toward the latter.

Solutions for lighting devices are also known in which LED light sources are located in a cavity inside a support body, distanced with respect to the exit aperture, and parabolas are provided to convey the beam of light toward the exit aperture. Such solutions, however, do not allow to obtain well defined light cones with angles greater than 30°.

In particular, known solutions do not allow to obtain a wide emission, known in the specific field as "flood" or "medium flood" type, that is, with angles of about 60°, with an exit aperture of reduced sizes. To obtain this in the state of the art, the tendency is to widen the section of the exit aperture, thus entailing the problems described above.

Furthermore, the beam of light conveyed toward the exit aperture, due to the combination of the backward position of the source and the reduced section of the exit aperture, is partly reflected inside the tubular body.

This results in a reduction in the emission of the beam of light, and therefore a decrease in the efficiency of the light sources. Consequently, to obtain at exit a beam of light with a determinate emission and intensity, it is necessary to use light sources with greater power, which entail an increase in energy consumption.

CN-Y-200 976 068 discloses a focusing light projector capable of projecting a small area, no astigmatism and high brightness spot at a long distance.

EP-A-0 140 994 A2 discloses a lighting device for producing a directable beam of light which can be used to light a stage or other forum where directable light is desired.

One purpose of the present invention is to provide a lighting device which allows a high efficiency of the light source and at the same time a high visual comfort for the users.

Another purpose of the present invention is to obtain a lighting device which has at exit a beam of light comprised inside a well-defined cone with the desired light emission and intensity.

Another purpose of the present invention is to provide a lighting device which allows to obtain well-defined beams of light with angles equal to or greater than 30°, to provide a "flood" or "medium flood" type lighting effect.

The Applicant has devised, tested and embodied the present invention to overcome the shortcomings of the state of the art and to achieve these and other purposes and advantages.

### SUMMARY OF THE INVENTION

The present invention is set forth and characterized in the independent claims 1 and 2, while the dependent claims describe other characteristics of the invention or variants to the main inventive idea.

In accordance with the above purposes, a lighting device according to the invention comprises:
- a support body defining a tubular cavity that develops along a longitudinal axis and provided with a first end and a second end aligned along the longitudinal axis;
- a support element attached to the first end of the tubular body;
- a light source of the LED (Light Emitting Diode) type installed in the tubular cavity and on the support element and configured to emit a beam of light along the longitudinal axis;
- a closing element associated with the second end of the support body and provided with a through aperture aligned with the longitudinal axis.

The lighting device also comprises a first lens and a second lens, distanced from each other, positioned in the tubular cavity, and aligned with said longitudinal axis.

The first lens is configured to receive the beam of light from the light source and generate a beam of light diffused toward the second lens.

The second lens is configured to receive the diffused beam of light from the first lens and collimate it in a collimated beam, so that it passes through the through aperture.

Thanks to the presence of the two lenses located in succession one after the other, the entire beam of light emitted by the light source, or at least the entire part of it which hits the first lens, is transmitted toward the exit aperture and made to pass through it, concentrating the rays inside a defined emission cone. This prevents unwanted reflections of rays of light inside the tubular cavity, which, on the one hand, could reduce the emission of the collimated beam of light and, on the other, could generate at exit rays with angles different from those desired and potentially annoying for users.

The two lenses located in succession one after the other allow to obtain at exit a collimated beam of light in a cone with an angle greater than or equal to 30°, in particular comprised between 30° and 70°, without loss of efficiency of the light emission.

The backward position of the light source with respect to the through exit aperture of the collimated beam, together with the reduced size thereof, allows to obtain a lighting device with reduced glare and high visual comfort for the user.

According to some embodiments, the second lens is configured to converge the rays of the collimated beam into a focal point aligned along the longitudinal axis.

According to other embodiments, the focal point is outside the tubular cavity, so as to guarantee that the entire beam of light emitted by the light source, or at least the portion thereof which hits the first lens, is emitted through the through aperture. This allows to obtain a lighting device with high efficiency and therefore limit the overall energy consumption.

According to some embodiments, the section of the cone of the collimated beam in correspondence with the second end of the support body is smaller than the size of the through aperture. In this way, there is no reflection of rays of the collimated beam inside the tubular cavity, and it is also guaranteed that the edges of the through aperture are not illuminated, and that no reflected rays are generated with undesired angles at exit.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a section view of a lighting device according to some embodiments of the present invention;
- fig. 2 is an exploded view of the components of the lighting device of fig. 1;
- fig. 3 is a section view of a lighting device in accordance with variant embodiments of the present invention.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

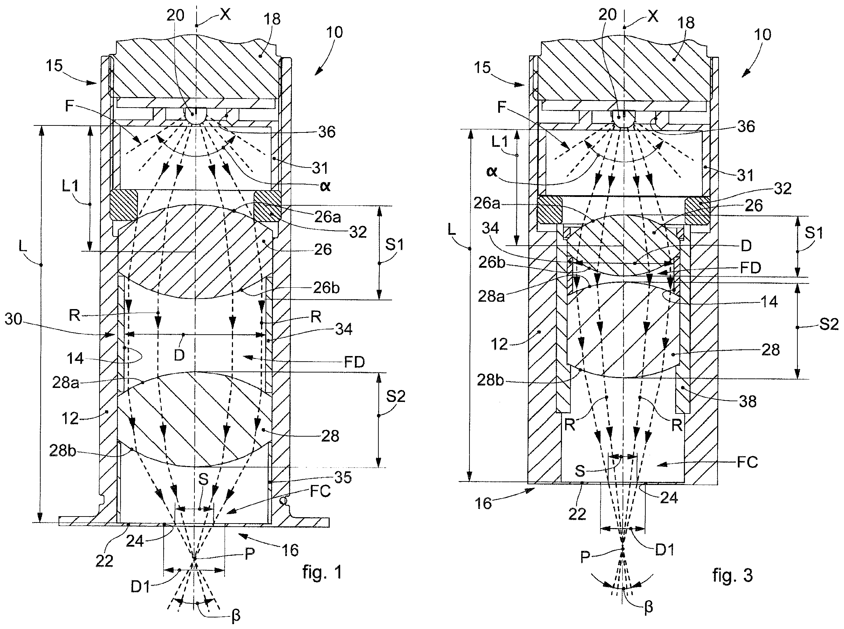

Embodiments described with reference to figs. 1-3 concern a lighting device 10, for example usable as a spotlight to illuminate a space, or which can be integrated inside a projector or similar apparatuses to generate a collimated beam of light FC with a well-defined emission cone. The lighting device 10 can for example be used for "down-light" or "up-light" applications, or bracket-mounted applications.

The lighting device 10 according to the present invention comprises a support body 12, defining at least part of a tubular cavity 14 which develops along a longitudinal axis X and provided with a first end 15 and a second end 16 aligned along the longitudinal axis X.

According to some embodiments, the tubular cavity 14 has a circular section. In particular, it is provided that the tubular cavity 14 has a cylindrical shape, thus preventing undesired reflections and deflections of the light.

According to some embodiments, the tubular cavity 14 has a length L and a width D.

If the section of the tubular cavity 14 has a circular shape, the width D corresponds to the diameter; if the section is polygonal, oval, or suchlike, the width D corresponds to the equivalent diameter D of the cross-section.

According to some embodiments, the width D can be constant or variable along the longitudinal axis X.

According to some embodiments, the length L of the tubular cavity 14 is comprised between about 2 and about 4.5 times a width D of the tubular cavity 14 in the intermediate zone between the first lens 26 and the second lens 28.

According to other embodiments, the length L of the tubular cavity 14 is comprised between 2.5 and 3.7 times the width D.

The lighting device 10 also comprises a support element 18 attached to the first end 15 of the tubular body 12.

The support element 18 allows to install the device with suitable support means (not shown) with a desired position and possibly orientation with respect to the zone to be illuminated.

The lighting apparatus 10 according to the invention also comprises a light source 20 of the LED type installed in the tubular cavity 14 and on the support element 18, and configured to emit a beam of light along the longitudinal axis X.

The light source 20 is in particular disposed at a distance from the second end 16 of the support body 12 substantially equal to the size of the length L of the tubular cavity 14.

By way of example, the light source 20 can comprise a plurality of LEDs disposed in a matrix order on a chip.

According to some embodiments, the light source 20 can be defined by a punctual light source, that is, defined by a single LED.

According to possible solutions, the light source 20 can be configured to emit a beam of light F with an angle of emission α which can be comprised between about 90° and about 130°, preferably between 100° and 120°.

According to possible solutions, the circuits necessary to feed and/or pilot the lighting element 20 can be housed inside the support element 18.

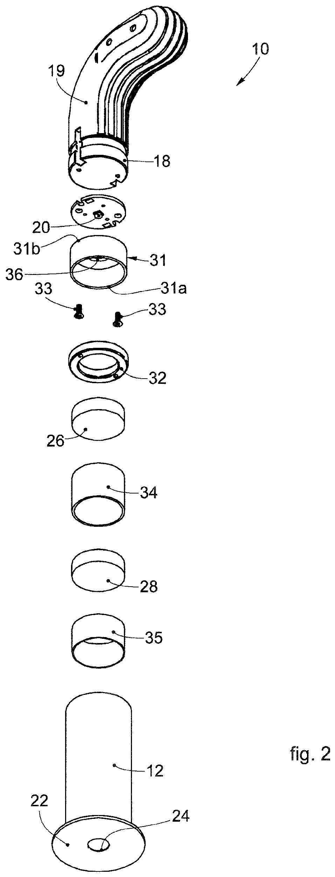

According to some embodiments, described for example with reference to fig. 2, the lighting apparatus 10 can comprise a thermal dissipation element 19 connected to the support element 18 and configured to dissipate the heat and the thermal energy generated by the light source 20 and the feed circuits connected thereto.

According to variant embodiments, the support element 18 and the dissipation element 19 can be made in a single body.

The lighting device 10 also comprises a closing element 22 associated with the second end 16 of the support body 12, and provided with a through aperture 24 aligned with the longitudinal axis X.

According to possible solutions, the closing element 22 can be made in a single body with the support body 12.

According to variant embodiments, the closing element 22 is made as a different and separate element from the support body 12 and can be connected thereto in a fixed or removable way.

The support body 12, the support element 18, and the closing element 22 define in their entirety the tubular cavity 14, which is open toward the outside only in correspondence with the through aperture 24.

According to some embodiments, the through aperture 24 has a diameter D1 comprised between about 8mm and about 12mm.

According to variant embodiments, the through aperture 24 has a diameter D1 comprised between about 9mm and about 11mm.

The width D of the tubular cavity 14 is comprised between 2 and 3 times, preferably between 2 and 2.5 times, the diameter D1 of the through aperture 24. This dimensional ratio has been suitably determined, to determine a light emission that is not annoying to the user.

The lighting device 10 also comprises a first lens 26 and a second lens 28 positioned in the tubular cavity 14, aligned with the longitudinal axis X.

The first lens 26 directly faces the light source 20, while the second lens 28 directly faces the through aperture 24.

The first lens 26 is configured to receive the beam of light from the lighting element 20 and generate a diffused beam of light FD toward the second lens 28.

The second lens 28 is configured to receive the diffused beam of light FD from the first lens 26, and collimate it in a collimated beam FC so as to make it pass through the through aperture 24.

According to some embodiments, the diffused beam of light FD between the first lens 26 and the second lens 28 has rays R parallel to each other.

According to some embodiments, the collimated beam FC generated by the second lens 28 has rays R converging with each other, and substantially enclosed in a cone of light with an exit angle β comprised between about 30° and about 70°.

According to some embodiments, the second lens 28 is configured to converge the rays of the collimated beam FC in a focal point P aligned along the longitudinal axis X.

According to further embodiments, the focal point P is located outside the tubular cavity 14.

According to further embodiments, the size of the cross-section S of the collimated beam FC, in correspondence with the through aperture 24, is smaller than the diameter D1 of the through aperture 24, therefore all the rays of the collimated beam FC transit through the through aperture 24 without hitting the edges thereof, and therefore without being reflected in an unwanted manner.

According to some embodiments, the first lens 26 and the second lens 28 are both bi-convex lenses with respective entry and exit convexities opposite each other.

According to some embodiments, the first lens 26 and the second lens 28 are each provided with an entry surface 26a, 28a, and an exit surface 26b, 28b, distanced from each other by a maximum thickness S 1, S2.

According to some embodiments, the first lens 26 and the second lens 28 have respective entry convexities and exit convexities symmetrical to each other with respect to a transverse median plane of the lens 26, 28.

In particular, the entry surface 26a and the exit surface 26b of the first lens 26 have equal radiuses of curvature, and the entry surface 28a and the exit surface 28b of the second lens 28 have equal radiuses of curvature.

According to variant embodiments, the first lens 26 and the second lens 28 have respective entry convexities and exit convexities different from each other.

The radius of curvature of the first surfaces 26a, 28a and of the second surfaces 26b, 28b, and the thicknesses S1, S2 of the two lenses 26, 28 can be varied according to the type and/or power of the light source 20 used, to the sizes of the tubular cavity 14, to the size of the exit aperture 24 and/or of the exit angle β of the collimated beam FC to be obtained.

Furthermore, the first lens 26 and the second lens 28 can be the same, or different, according to the exit angle β of the collimated beam FC to be obtained.

According to some embodiments, the support body 12 comprises positioning elements 30, defining at least part of the tubular cavity 14 and configured to define a positioning of the first lens 26 and of the second lens 28 both with respect to each other, and also in relation to the light source 20 and to the exit aperture 24.

According to some embodiments, the positioning elements 30, at least in the surface facing the tubular cavity 14, can have a matte black color and/or finish to prevent unwanted reflections of the rays R inside the tubular cavity 14.

According to possible solutions, the finish can be made, for example, by means of anodizing or painting or other suitable methods.

According to possible variant embodiments, the positioning elements 30 can have an embossed surface, for example with a gloss value of less than 5.

According to possible solutions, the support element 18 is provided to close the tubular cavity 14 by closing pack-wise the first lens 26 and the second lens 28 between the positioning elements 30.

According to some embodiments, the positioning elements 30 comprise a first spacer 31 located between the light source 20 and the first lens 26, configured to position the latter at a desired distance from the light source 20.

According to a possible solution, the light source 20 can be distanced from the first lens 26, that is, with respect to a median plane of the first lens 26, by a first distance LI. By way of example only, the first distance L1 can be comprised between 0.7 and 1.5 times the width D of the tubular cavity 14. The reciprocal positioning of the light source 20 and the first lens 26 allows to obtain a collimated beam FC, at exit from the lighting device, with a very defined exit cone and in which the projection of the collimated beam FC on a surface to be illuminated is also extremely defined.

According to some embodiments, the first spacer 31 can have a tubular shape with an open end 31a, facing, during use, toward the first lens 26, and a closed end 31b, provided with a passage aperture 36 in which, during use, the light source 20 is positioned.

According to some embodiments, a clamping element 32 can be interposed between the first spacer 31 and the first lens 26.

According to some embodiments, the positioning elements 30 can comprise a second spacer 34 located between the first lens 26 and the second lens 28 to keep them at a desired and defined reciprocal distance.

According to further embodiments, the positioning elements 30 comprise a third spacer 35 located between the second lens 28 and the closing element 22.

According to possible variant embodiments, for example described with reference to fig. 3, the positioning elements 30 can comprise a tubular body 38, on which the clamping element 32 is positioned in abutment, which extends for most of the length L of the tubular cavity 14 and which supports both the first lens 26 and also the second lens 28.

According to some embodiments, described for example with reference to figs. 1 and 2, the collimated beam FC has an exit angle β of about 60°, and the first lens 26 and the second lens 28 are equal one to the other.

According to this example solution, the first lens 26 is located in a first half of the length L of the tubular cavity 14, and the second lens 28 is located in the second half of the tubular cavity 14.

According to the invention, as disclosed in claim 1, the distance between the first lens 26 and the second lens 28 can be comprised between 0.9 and 1 times the distance between the light source 20 and the first lens 26, and the distance between the second lens 28 and the through aperture 24 is comprised between 0.7 and 0.8 times the distance between the light source 20 and the first lens 26.

According to variant embodiments, for example described with reference to fig. 3, the collimated beam FC has an exit angle β of about 30°, smaller than the emission angle α of the beam F coming from the light source, and the first lens 26 and the second lens 28 are different.

According to this example solution, the first lens 26 has a thickness S1 smaller than the thickness S2 of the second lens 28, and the radiuses of curvature of the first lens 26 are smaller than the radiuses of curvature of the second lens 28.

According to these variants, the distance between the first lens 26 and the second lens 28 can be much smaller than the distance between the light source 20 and the first lens 26.

According to the invention, as disclosed in claim 2, the distance between the first lens 26 and the second lens 28 is about 0.08 - 0.1 times the distance between the light source 20 and the first lens 26, and the distance between the second lens 28 and the through aperture 24 is about 1.2 - 1.3 times the distance between the light source 20 and the first lens 26.

It is clear that modifications and/or additions of parts may be made to the lighting device 10 as described heretofore, without departing from the field and scope of the present invention.

It is also clear that, although the present invention has been described with reference to some specific examples, a person of skill in the art shall certainly be able to achieve many other equivalent forms of lighting device 10, having the characteristics as set forth in the claims and hence all coming within the field of protection defined thereby.

## Claims

1. Lighting device comprising:
- a support body (12) defining a tubular cavity (14) that develops along a longitudinal axis (X) and provided with a first end (15) and a second end (16) aligned along said longitudinal axis (X);
- a support element (18) attached to said first end (15);
- a light source (20) of the LED type installed in said tubular cavity (14) and on the support element (18) and configured to emit a beam of light (F) along said longitudinal axis (X);
- a closing element (22) associated with the second end (16) of the support body (12) and provided with a through aperture (24) aligned with said longitudinal axis (X), wherein the lighting device comprises a first lens (26) and a second lens (28), distanced from each other and from said through aperture (24), positioned in said tubular cavity (14) and aligned with said longitudinal axis (X), wherein said first lens (26) is configured to receive the beam of light (F) from said light source (20) and generate a beam of light with parallel rays (R) toward said second lens (28), and said second lens (28) is configured to receive the beam of light with parallel rays (R) from said first lens (26) and convey it in a collimated beam (FC), passing through said through aperture (24), wherein the distance between the first lens (26) and the second lens (28) is comprised between 0.9 and 1 times the distance between the light source (20)and the first lens (26),
**characterized in that** the width (D) of said tubular cavity (14) is comprised between 2 and 3 times, preferably between 2 and 2.5 times, the diameter (D1) of said through aperture (24), and the distance between the second lens (28) and the through aperture (24) is comprised between 0.7 and 0.8 times the distance between the light source (20) and the first lens (26).

2. Lighting device comprising:
- a support body (12) defining a tubular cavity (14) that develops along a longitudinal axis (X) and provided with a first end (15) and a second end (16) aligned along said longitudinal axis (X);
- a support element (18) attached to said first end (15);
- a light source (20) of the LED type installed in said tubular cavity (14) and on the support element (18) and configured to emit a beam of light (F) along said longitudinal axis (X);
- a closing element (22) associated with the second end (16) of the support body (12) and provided with a through aperture (24) aligned with said longitudinal axis (X), wherein the lighting device comprises a first lens (26) and a second lens (28), distanced from each other and from said through aperture (24), positioned in said tubular cavity (14) and aligned with said longitudinal axis (X), wherein said first lens (26) is configured to receive the beam of light (F) from said light source (20) and generate a beam of light with parallel rays (R) toward said second lens (28), and said second lens (28) is configured to receive the beam of light with parallel rays (R) from said first lens (26) and convey it in a collimated beam (FC), passing through said through aperture (24), wherein the width (D) of said tubular cavity (14) is comprised between 2 and 3 times, preferably between 2 and 2.5 times, the diameter (D1) of said through aperture (24), **characterized in that**
the distance between the first lens (26) and the second lens (28) is about 0.08 - 0.1 times the distance between the light source (20) and the first lens (26), and the distance between the second lens (28) and the through aperture (24) is about 1.2 - 1.3 times the distance between the light source (20) and the first lens (26).

3. Lighting device as in claim 1 or 2, **characterized in that** said through aperture (24) has a diameter (D1) of a size comprised between about 8mm and about 12mm.

4. Lighting device as in any claim hereinbefore, **characterized in that** said second lens (28) is configured to converge the rays of said collimated beam (FC) in a focal point (P) aligned along said longitudinal axis (X).

5. Lighting device as in claim 4, **characterized in that** said focal point (P) is located outside said tubular cavity (14).

6. Lighting device as in claim 3 and any claim hereinbefore, **characterized in that** said collimated beam (FC) in correspondence with the through aperture (24) has a cross section (S) of a smaller size than said diameter (D1) of said through aperture (24).

7. Lighting device as in any claim hereinbefore, **characterized in that** said tubular cavity (14) has a circular section and a cylindrical shape.

8. Lighting device as in any claim hereinbefore, **characterized in that** said tubular cavity (14) has a length (L) comprised between about 2 and about 4.5 times a width (D) of said tubular cavity (14).

9. Lighting device as in any claim hereinbefore, **characterized in that** the support body (12) comprises positioning elements (30), defining at least part of the tubular cavity (14) and configured to define a reciprocal positioning of said first lens (26) and said second lens (28) both with respect to each other and also with respect to said lighting source (20) and said exit aperture (24).

10. Lighting device as in claim 9, **characterized in that** said positioning elements (30) have a matte black finish.

11. Lighting device as in any claim hereinbefore, **characterized in that** said first lens (26) and said second lens (28) are bi-convex lenses.

## Patentansprüche

1. Beleuchtungsvorrichtung, die Folgendes aufweist:
- einen Trägerkörper (12), der einen Tubus (14) definiert, der sich entlang einer Longitudinalachse (X) erstreckt und an dem ein erstes Ende (15) und ein zweites Ende (16) ausgerichtet entlang der Longitudinalachse (X) ausgebildet sind;
- ein Trägerelement (18), das an dem ersten Ende (15) befestigt ist;
- eine Lichtquelle (20) in LED-Bauart, die in dem Tubus (14) und an dem Trägerelement (18) angeordnet ist und die dazu eingerichtet ist, ein Lichtstrahlenbündel (F) entlang der Longitudinalachse (X) auszustrahlen; und
- ein Verschlusselement (22), das dem zweiten Ende (16) des Trägerkörpers (12) zugeordnet ist und das mit einer Apertur (24) ausgebildet ist, die mit der Longitudinalachse (X) ausgerichtet ist;
wobei die Beleuchtungsvorrichtung eine erste Linse (26) und eine zweite Linse (28) aufweist, die voneinander und von der Apertur (24) beabstandet sind und die in dem Tubus (14) ausgerichtet mit der Longitudinalachse (X) angeordnet sind;
wobei die erste Linse (26) dazu eingerichtet ist, das Lichtstrahlenbündel (F) von der Lichtquelle (20) zu empfangen und ein Lichtstrahlenbündel mit Parallelstrahlen (R) in Richtung der zweiten Linse (28) zu erzeugen;
wobei die zweite Linse (28) dazu eingerichtet ist, das Lichtstrahlenbündel mit Parallelstrahlen (R) von der ersten Linse (26) zu empfangen und es als kollimiertes Lichtstrahlenbündel (FC), das die Apertur (24) durchläuft, weiterzuleiten; und
wobei der Abstand zwischen der ersten Linse (26) und der zweiten Linse (28) im Bereich des 0,9-fachen bis 1-fachen des Abstands zwischen der Lichtquelle (20) und der ersten Linse (26) liegt;
**dadurch gekennzeichnet, dass**
die Breite (D) des Tubus (14) im Bereich des 2-fachen bis 3-fachen, bevorzugt im Bereich des 2-fachen bis 2,5-fachen, des Durchmessers (D1) der Apertur (24) liegt; und
der Abstand zwischen der zweiten Linse (28) und der Apertur (24) im Bereich des 0,7-fachen bis 0,8-fachen des Abstands zwischen der Lichtquelle (20) und der ersten Linse (26) liegt.

2. Beleuchtungsvorrichtung, die Folgendes aufweist:
- einen Trägerkörper (12), der einen Tubus (14) definiert, der sich entlang einer Longitudinalachse (X) erstreckt und an dem ein erstes Ende (15) und ein zweites Ende (16) ausgerichtet entlang der Longitudinalachse (X) ausgebildet sind;
- ein Trägerelement (18), das an dem ersten Ende (15) befestigt ist;
- eine Lichtquelle (20) in LED-Bauart, die in dem Tubus (14) und an dem Trägerelement (18) angeordnet ist und die dazu eingerichtet ist, ein Lichtstrahlenbündel (F) entlang der Longitudinalachse (X) auszustrahlen; und
- ein Verschlusselement (22), das dem zweiten Ende (16) des Trägerkörpers (12) zugeordnet ist und das mit einer Apertur (24) ausgestattet ist, die mit der Longitudinalachse (X) ausgerichtet ist;
wobei die Beleuchtungsvorrichtung eine erste Linse (26) und eine zweite Linse (28) aufweist, die voneinander und von der Apertur (24) beabstandet sind und die in dem Tubus (14) ausgerichtet mit der Longitudinalachse (X) angeordnet sind;
wobei die erste Linse (26) dazu eingerichtet ist, das Lichtstrahlenbündel (F) von der Lichtquelle (20) zu empfangen und ein Lichtstrahlenbündel mit Parallelstrahlen (R) in Richtung der zweiten Linse (28) zu erzeugen; wobei
wobei die zweite Linse (28) dazu eingerichtet ist, das Lichtstrahlenbündel mit Parallelstrahlen (R) von der ersten Linse (26) zu empfangen und es als kollimiertes Lichtstrahlenbündel (FC), das die Apertur (24) durchläuft, weiterzuleiten;
wobei die Breite (D) des Tubus (14) im Bereich des 2-fachen bis 3-fachen, bevorzugt im Bereich des 2-fachen bis 2,5-fachen, des Durchmessers (D1) der Apertur (24) liegt;
**dadurch gekennzeichnet, dass**
der Abstand zwischen der ersten Linse (26) und der zweiten Linse (28) im Bereich des 0,08-fachen bis 0,1-fachen des Abstands zwischen der Lichtquelle (20) und der ersten Linse (26) liegt; und
der Abstand zwischen der zweiten Linse (28) und der Apertur (24) im Bereich des 1,2-fachen bis 1,3-fachen des Abstands zwischen der Lichtquelle (20) und der ersten Linse (26) liegt.

3. Beleuchtungsvorrichtung nach einem der Ansprüche 1 oder 2, weiterhin **dadurch gekennzeichnet, dass** die Apertur (24) einen Durchmesser (D1) im Bereich von etwa 8 mm bis etwa 12 mm hat.

4. Beleuchtungsvorrichtung nach einem der vorhergehenden Ansprüche, weiterhin **dadurch gekennzeichnet, dass** die zweite Linse (28) dazu eingerichtet ist, die Strahlen des kollimierten Lichtstrahlenbündels (FC) in einem Brennpunkt (P) zusammenzuführen, der mit der Longitudinalachse (X) ausgerichtet ist.

5. Beleuchtungsvorrichtung nach Anspruch 4, weiterhin **dadurch gekennzeichnet, dass** der Brennpunkt (P) außerhalb des Tubus (14) liegt.

6. Beleuchtungsvorrichtung nach Anspruch 3 und einem der vorhergehenden Ansprüche, weiterhin **dadurch gekennzeichnet, dass** das kollimierte Lichtstrahlenbündel (FC) in einem der Apertur (24) entsprechenden Bereich einen Querschnitt (S) aufweist, der kleiner ist als der Durchmesser (D1) der Apertur (24).

7. Beleuchtungsvorrichtung noch einem der vorhergehenden Ansprüche, weiterhin **dadurch gekennzeichnet, dass** der Tubus (14) einen kreisförmigen Abschnitt und eine Zylinderform aufweist.

8. Beleuchtungsvorrichtung nach einem der vorhergehenden Ansprüche, weiterhin **dadurch gekennzeichnet, dass** der Tubus (14) eine Länge (L) im Bereich des etwa 2-fachen bis etwa 4,5-fachen der Breite (D) des Tubus (14) hat.

9. Beleuchtungsvorrichtung nach einem der vorhergehenden Ansprüche, weiterhin **dadurch gekennzeichnet, dass** der Trägerkörper (12) Positionierelemente (30) aufweist, die zumindest einen Teil des Tubus (14) definieren und die dazu eingerichtet sind, eine relative Anordnung festzulegen, die eine Anordnung der ersten Linse (26) und der zweiten Linse (28) zueinander umfasst sowie deren Anordnung relativ zu der Lichtquelle (20) und der Apertur (24).

10. Beleuchtungsvorrichtung nach Anspruch 9, weiterhin **dadurch gekennzeichnet, dass** die Positionierelemente (30) eine matte schwarze Oberfläche aufweisen.

11. Beleuchtungsvorrichtung nach einem der vorhergehenden Ansprüche, weiterhin **dadurch gekennzeichnet, dass** die erste Linse (26) und die zweite Linse (28) Bikonvexlinsen sind.

## Revendications

1. Dispositif d'éclairage comprenant :
- un corps de support (12) définissant une cavité tubulaire (14) qui se développe selon un axe longitudinal (X) et prévu avec une première extrémité (15) et une deuxième extrémité (16) alignées selon ledit axe longitudinal (X) ;
- un élément de support (18) fixé à ladite première extrémité (15) ;
- une source de lumière (20) du type LED installée dans ladite cavité tubulaire (14) et sur l'élément de support (18) et configurée pour émettre un faisceau lumineux (F) selon ledit axe longitudinal (X) ;
- un élément de fermeture (22) associé à la deuxième extrémité (16) du corps de support (12) et pourvu d'une ouverture traversante (24) alignée avec ledit axe longitudinal (X), le dispositif d'éclairage comprenant une première lentille (26) et une deuxième lentille (28), distantes l'une de l'autre et de ladite ouverture traversante (24), positionnées dans ladite cavité tubulaire (14) et alignées avec ledit axe longitudinal (X), ladite première lentille (26) étant configurée pour recevoir le faisceau de lumière (F) provenant de ladite source de lumière (20) et pour générer un faisceau de lumière avec des rayons parallèles (R) vers ladite deuxième lentille (28), et ladite deuxième lentille (28) étant configurée pour recevoir le faisceau de lumière avec des rayons parallèles (R) provenant de ladite première lentille (26) et pour le transporter dans un faisceau collimaté (FC), passant à travers ladite ouverture traversante (24), la distance entre la première lentille (26) et la deuxième lentille (28) étant comprise entre 0,9 et 1 fois la distance entre la source de lumière (20) et la première lentille (26), **caractérisé en ce que** la largeur (D) de ladite cavité tubulaire (14) est comprise entre 2 et 3 fois, de préférence entre 2 et 2,5 fois, le diamètre (D1) de ladite ouverture traversante (24), et la distance entre la deuxième lentille (28) et l'ouverture traversante (24) est comprise entre 0,7 et 0,8 fois la distance entre la source de lumière (20) et la première lentille (26).

2. Dispositif d'éclairage comprenant :
- un corps de support (12) définissant une cavité tubulaire (14) qui se développe selon un axe longitudinal (X) et prévu avec une première extrémité (15) et une deuxième extrémité (16) alignées selon ledit axe longitudinal (X) ;
- un élément de support (18) fixé à ladite première extrémité (15) ;
- une source de lumière (20) du type LED installée dans ladite cavité tubulaire (14) et sur l'élément de support (18) et configurée pour émettre un faisceau lumineux (F) selon ledit axe longitudinal (X) ;
- un élément de fermeture (22) associé à la deuxième extrémité (16) du corps de support (12) et pourvu d'une ouverture traversante (24) alignée avec ledit axe longitudinal (X), le dispositif d'éclairage comprenant une première lentille (26) et une deuxième lentille (28), distantes l'une de l'autre et de ladite ouverture traversante (24), positionnées dans ladite cavité tubulaire (14) et alignées avec ledit axe longitudinal (X), ladite première lentille (26) étant configurée pour recevoir le faisceau de lumière (F) provenant de ladite source de lumière (20) et pour générer un faisceau de lumière avec des rayons parallèles (R) vers ladite deuxième lentille (28), et ladite deuxième lentille (28) étant configurée pour recevoir le faisceau de lumière avec des rayons parallèles (R) provenant de ladite première lentille (26) et pour le transporter dans un faisceau collimaté (FC), passant à travers ladite ouverture traversante (24), la largeur (D) de ladite cavité tubulaire (14) étant comprise entre 2 et 3 fois, de préférence entre 2 et 2,5 fois, le diamètre (D1) de ladite ouverture traversante (24), **caractérisé en ce que**
la distance entre la première lentille (26) et la deuxième lentille (28) est d'environ 0,08 à 0,1 la distance entre la source de lumière (20) et la première lentille (26), et la distance entre la deuxième lentille (28) et l'ouverture traversante (24) est d'environ 1,2 à 1,3 fois la distance entre la source de lumière (20) et la première lentille (26).

3. Dispositif d'éclairage selon la revendication 1 ou la revendication 2, **caractérisé en ce que** ladite ouverture traversante (24) a un diamètre (D1) d'une taille comprise entre environ 8 mm et environ 12 mm.

4. Dispositif d'éclairage selon l'une quelconque des revendications précédentes, **caractérisé en ce que** ladite deuxième lentille (28) est configurée pour faire converger les rayons dudit faisceau collimaté (FC) en un point focal (P) aligné selon ledit axe longitudinal (X).

5. Dispositif d'éclairage selon la revendication 4, **caractérisé en ce que** ledit point focal (P) est situé à l'extérieur de ladite cavité tubulaire (14).

6. Dispositif d'éclairage selon la revendication 3 et l'une quelconque des revendications précédentes, **caractérisé en ce que** ledit faisceau collimaté (FC) en correspondance avec l'ouverture traversante (24) a une section transversale (S) d'une dimension inférieure audit diamètre (D1) de ladite ouverture traversante (24).

7. Dispositif d'éclairage selon l'une quelconque des revendications précédentes, **caractérisé en ce que** ladite cavité tubulaire (14) a une section circulaire et une forme cylindrique.

8. Dispositif d'éclairage selon l'une quelconque des revendications précédentes, **caractérisé en ce que** ladite cavité tubulaire (14) a une longueur (L) comprise entre environ 2 et environ 4,5 fois une largeur (D) de ladite cavité tubulaire (14).

9. Dispositif d'éclairage selon l'une quelconque des revendications précédentes, **caractérisé en ce que** le corps de support (12) comprend des éléments de positionnement (30), définissant au moins une partie de la cavité tubulaire (14) et configurés pour définir un positionnement réciproque de ladite première lentille (26) et ladite deuxième lentille (28) toutes deux l'une par rapport à l'autre et également par rapport à ladite source d'éclairage (20) et à ladite ouverture de sortie (24).

10. Dispositif d'éclairage selon la revendication 9, **caractérisé en ce que** lesdits éléments de positionnement (30) ont une finition noire mate.

11. Dispositif d'éclairage selon l'une quelconque des revendications précédentes, **caractérisé en ce que** ladite première lentille (26) et ladite deuxième lentille (28) sont des lentilles biconvexes.
